(19) **Europäisches Patentamt / European Patent Office / Office européen des brevets**

(11) **EP 4 488 854 A1**

(12) **DEMANDE DE BREVET EUROPEEN**

(43) Date de publication:
 **08.01.2025 Bulletin 2025/02**

(21) Numéro de dépôt: **24185733.3**

(22) Date de dépôt: **01.07.2024**

(51) Classification Internationale des Brevets (IPC):
 **G06F 17/13** [(2006.01)]

(52) Classification Coopérative des Brevets (CPC):
 **G06F 17/13**

(84) Etats contractants désignés:
 **AL AT BE BG CH CY CZ DE DK EE ES FI FR GB GR HR HU IE IS IT LI LT LU LV MC ME MK MT NL NO PL PT RO RS SE SI SK SM TR**
 Etats d'extension désignés:
 **BA**
 Etats de validation désignés:
 **GE KH MA MD TN**

(30) Priorité: **07.07.2023 FR 2307321**

(71) Demandeurs:
 • **Commissariat à l'Energie Atomique et aux Energies Alternatives**
  **75015 Paris (FR)**
 • **Université Grenoble Alpes**
  **38400 Saint Martin d'Hères (FR)**

 • **Centre National de la Recherche Scientifique**
  **75016 Paris (FR)**
 • **Institut Polytechnique de Grenoble**
  **38031 Grenoble Cedex 1 (FR)**

(72) Inventeurs:
 • **LOPEZ-FERBER, Roman**
  **38054 Grenoble Cedex 09 (FR)**
 • **LEIRENS, Sylvain**
  **38054 Grenoble Cedex 09 (FR)**
 • **GEORGES, Didier**
  **38000 Grenoble (FR)**

(74) Mandataire: **Atout PI Laplace Immeuble Up On 25 Boulevard Romain Rolland CS 40072 75685 Paris Cedex 14 (FR)**

(54) **PROCÉDÉ DE DÉTERMINATION DE COORDONNÉES DANS L'ESPACE D'UNE SOURCE À L'ORIGINE D'UN PHÉNOMÈNE DE DISPERSION**

(57) Procédé de détermination de coordonnées dans l'espace d'une source à l'origine d'un phénomène de dispersion dans un domaine, le phénomène de dispersion étant approché par un système d'équations aux dérivées partielles (20), le procédé comprenant des étapes, mises en oeuvre par ordinateur,
- d'obtention de mesures (60) quantifiant chacune en un point de l'espace du domaine et à un instant donné une variable d'état modélisée par le système d'équations aux dérivées partielles audit point et audit instant et
- de minimisation itérative (70) des différences entre les mesures et les calculs du système d'équations pour localiser une position (80) de ladite source.

Le système d'équations est exprimé (50) par différences finies supportées par des fonctions de base radiales, le système d'équations étant résolu en moindres carrés, à l'aide d'un solveur de moindres carrés, le système d'équations ayant fait l'objet d'une résolution quadratique adjointe en choisissant des fonctions de base radiale parmi les fonctions splines polyharmoniques, les fonctions inverses multi-quadriques, ou les fonctions gaussiennes.

Fig. 3

## Description

### Domaine de l'invention

L'invention concerne le domaine de la modélisation de la dispersion de pollution atmosphérique, en particulier dans un environnement urbain.

On s'intéresse à l'identification (localisation, estimation de forme et estimation d'amplitude) de sources de pollution atmosphérique en milieu urbain, notamment la canopée urbaine, en disposant d'un ensemble de mesures localisées.

Ainsi, le problème abordé est l'identification de sources de pollution en milieu urbain par un réseau de capteurs à bas coût. Les sources émettent des polluants (des gaz, des particules) qui sont dispersés par le vent. La géométrie complexe du bâti urbain génère un champ de vent qui n'est pas homogène à l'échelle d'un quartier.

Sur la base d'un choix de modélisation et d'un ensemble de mesures bruitées disponibles (réseau de capteurs ou capteurs mobiles), il s'agit de résoudre un problème inverse pour estimer la position et les caractéristiques des sources. C'est un problème de fusion robuste de données spatio-temporelles en présence de contraintes spatiales et d'incertitudes de mesure.

Les méthodes fiables connues sont des méthodes basées sur des modèles physiques où on recherche un terme ou plusieurs termes d'entrée inconnus appliqués à des équations aux dérivées partielles (EDP) en minimisant l'erreur entre les mesures et la sortie d'un modèle mathématique représentant le système physique, celui-ci étant donc sensible à des entrées inconnues qui doivent être estimées.

En ce qui concerne l'identification de sources de pollution, plusieurs méthodes ont été appliquées dans l'état de l'art comme le filtrage de Kalman et ses variantes (Defforge, 2019; Mons et al., 2017), le calcul des variations (Kumar et al., 2015) parfois associé à l'utilisation de modèles réduits (Khodayi-mehr, 2019) ou encore des filtres à particules (Septier et al., 2020).

Ces méthodes ont le défaut d'être couteuses en calcul, ou alors dans le cadre de l'utilisation de modèles réduits moins coûteux en calcul, de nécessiter de créer pour chaque scénario de dispersion, une base de données d'apprentissage.

De plus la pollution atmosphérique est un phénomène tridimensionnel qui nécessite d'être modélisée sur des espaces de calculs fins et complexes.

### Un outil spécifique : les fonctions de base radiales à différences finies aux moindres carrés

L'approche d'estimation de terme source employée dans la présente invention utilise les fonctions LS-RBF-FD (Least-Squares Radial Basis Functions Finite Differences ou fonctions de base radiales à différences finies aux moindres carrés) pour créer un modèle numérique de dispersion de polluant précis. Les modélisations de type LS-RBF-FD sont apparues récemment dans la littérature (Tominec et al., 2021). Similaires aux RBF-FD qui sont connues depuis environ 10 ans (Flyer et al., 2012) elles partagent leur rapidité mais ont une robustesse accrue dans le calcul de solutions notamment pour le calcul de variables de champ tri-dimensionnelles.

### Modélisation de la pollution atmosphérique

Les LS-RBF-FD sont utilisées dans un mode de réalisation sur une équation de transport de polluants appelée advection-diffusion et notée ADEDP. Cette équation modélise le transport de polluants considéré sans terme de réaction et régit un champ scalaire de concentration $u: x \in \Omega = \Omega° \cup \partial\Omega, t \in T \mapsto u(x, t)$. Cette équation s'écrit,

[Eq. 1]

$$\begin{cases} \dfrac{\partial u}{\partial t} + U_x \dfrac{\partial u}{\partial x} + U_y \dfrac{\partial u}{\partial y} + U_z \dfrac{\partial u}{\partial z} = \dfrac{\partial}{\partial x}\left(K_x \dfrac{\partial}{\partial x}\right) + \dfrac{\partial}{\partial y}\left(K_y \dfrac{\partial u}{\partial y}\right) + \dfrac{\partial}{\partial z}\left(K_z \dfrac{\partial u}{\partial z}\right) + s, & x \in \Omega° \\ \partial_i u \cdot \bar{n} = 0 & x \in \Gamma_N \\ u(x, t) = 0 & x \in \Gamma_D \\ u(x, t = 0) = u_0 & x \in \Omega° \end{cases}$$

avec $t \in T$ le temps, $x \in \Omega \subset \mathbb{R}^3$ la position, $U_i$, $K_i$ les composantes des vélocités et diffusivités du champ de vent et de diffusion moyens, u la concentration de polluant, s le terme source de pollution.

fl représente le domaine spatial où l'équation différentielle d'advection-diffusion est appliquée tandis que $\partial\Omega = \Gamma_D$

$\cup \Gamma_N$ représente les bords du domaine où des conditions limites sont appliquées. On s'intéresse à une situation où $\Gamma_D$ est le domaine de bord où s'appliquent des conditions de Dirichlet et $\Gamma_N$ des conditions de flux nul.

La météorologie, à savoir, les champs de vent U et de diffusion K, sont obtenus par un modèle tiers.

Les équations d'advection/diffusion sont difficiles à modéliser sur un environnement urbain avec des contraintes spatiales et sont couteuses en calcul. Il est nécessaire de proposer une solution pour rendre le calcul accessible.

## Ecriture de l'équation d'advection/diffusion en régime stationnaire, sous la forme d'opérateurs différentiels

L'ADEDP est résolue dans un régime stationnaire. De plus le modèle physique peut être reformulé de manière condensée en exprimant les opérateurs de dérivées appliqués sur c comme un opérateur différentiel générique $\mathcal{L}$ sur $\Omega°$ et $\mathcal{B}$ sur les conditions limites en $\partial\Omega = \Gamma_D \cup \Gamma_N$ tel que,

$$\mathcal{L}c(x) = s(x), \quad x \in \Omega°; \quad \mathcal{B}c(x) = g(x), \quad x \in \partial_\Omega.$$

Dans l'ADEDP, s est le terme source et g = 0.

Les RBF sont connues pour interpoler de manière satisfaisante les espaces (2D, 3D, 4D notamment).

Une fonction quelconque f: $y \in \Omega \mapsto f(y) \in f(\Omega) \subset \mathbb{R}^d$ (d étant la dimension de l'espace) peut être reconstruite par quelques fonctions de bases (RBF) $\phi$ centrée sur des noeuds $\{x_i\}_{i=1}^{N_x} = X \subset \Omega$. Si on note $\hat{f}$ la fonction interpolante de f alors,

[Eq. 2]

$$\hat{f}(y) = \sum_{i=1}^{N_x} a_i \phi(\| y - x_i \|), \quad \forall y \in \Omega. \quad (2)$$

Où $\|\cdot\|$ dénote la norme euclidienne. Il est connue que $\hat{f}$ est une approximation satisfaisante de f prouvant sous condition d'espacement régulier des centres de base $x_i$. Le problème d'interpolation admet alors une unique solution de vecteur de coefficients à = $(a_1, \ldots, a_{N_x})^T$ pour différentes bases [(Fornberg and Flyer, 2015) Chapitre 3, p. 39-47] en particulier pour les bases PHS (polyharmonique splines ou splines polyharmoniques) [(Barnett, 2015) p. 13 théorème 2] utilisées ici. Les PHS ont pour expression,

$$[\text{Eq. 3}] \; \phi(y) = r^{2k-1}, \; k \geq 1, \; \text{with } r = \| y - x_i \|.$$

## Problème inverse au sens de l'estimation de terme sources d'équations aux dérivées partielles

La résolution du problème inverse est considérée comme l'exécution du flux de travail avec des méthodes basées sur des modèles.

Un vecteur d'inconnues $\theta$ est la variable à estimer, et est initialisé à la valeur $\theta_0$. Par exemple dans l'équation d'advection-diffusion en (1) $\theta$ peut correspondre au vecteur de source entier par exemple $\theta = \bar{s}$ mais aussi si la source est unique $\theta$ peut correspondre à une paramétrisation qui s'exprime avec une amplitude et une position par exemple $\theta = (a_s, x_s)$.

Les mesures $u^m$ échantillonnent la variable de champ u, par exemple le champ de concentration de l'équation d'advection-diffusion. Elles sont généralement bruitées, et on peut fournir à l'algorithme mettant en oeuvre la méthode inverse un modèle de bruit si le bruit des capteurs est caractérisé.

Le modèle (modèle de dispersion) de contrainte physique m s'applique aux inconnues d'entrées de modèle $\theta$ de sorte que $u_e = m(\theta)$. Ainsi la variable de champ calculée $u_e$ est de même nature que $u^m$. On applique un modèle de mesures h pour faire correspondre les mesures $u^m$ notamment leurs positions avec $m(\theta)$ pour calculer un écart (généralement quadratique) de type $r^2 = [u^m - h(m(\theta))]^2$ qui permet d'exprimer un terme d'erreur.

Les méthodes variationnelles ou bayésiennes optimisent ce terme d'erreur pour retourner une estimé $\hat{\theta}$, avec éventuellement des plages d'incertitudes. L'estimation nécessite généralement plusieurs appels de modèle physique m ce qui est couteux en calcul.

Le résultat du flux de travail est des paramètres estimés et une incertitude si la méthode est bayésienne.

Le problème inverse abordé est la reconstruction du terme source discrétisé $\bar{s}$. Pour identifier un terme source, paramétrisé ou non, on parle de l'estimation de terme Source.

**Etat de la technique**

Les fonctions de base radiales, leurs variantes à différences finies et leurs variantes à différences finies et moindres carrés LS-RBF-FD sont connues. Les LS-RBF-FD sont utilisées ici pour faire de la modélisation de la pollution de l'air et pour résoudre le problème inverse de l'estimation de source de pollution en combinaison d'une réduction de modèle.

L'article de (Khodayi-mehr, 2019) utilise des modèles réduits pour de l'identification de source. La réduction de modèles est obtenue par analyse en composantes principales (ACP). Pour construire ces modèles les auteurs ont créés plusieurs scénarios de dispersion stationnaire en faisant varier uniquement la position d'une source de pollution. Ils ont utilisé une méthode variationnelle adjointe pour leur problème inverse qui fait de multiples appels au modèle réduit appris par ACP sur deux cas d'études bidimensionnels stationnaires. Mais le transport en hauteur n'est pas négligeable. Il est alors préférable d'utiliser des modèles tridimensionnels de transport. De plus l'ACP nécessite des données d'apprentissage. Si le domaine physique change ou si la météo ou encore la forme des sources de polluants changent, il faut recalculer une base de données.

L'article (Liu et al., 2019) s'intéresse à une modélisation de la pollution atmosphérique basé sur les RBF-FD, mais pas résolue ni tridimensionnellement ni en moindre carrés. Les auteurs utilisent un modèle physique de transport de polluants instationnaire RBF-FD bidimensionnel. Ils ont calculé la météo et ont réutilisé le maillage comme points de calcul pour leur modèle. Le domaine de calcul comprend des obstacles de forme rectangulaires. Une géométrie complexe urbaine nécessiterait de traiter les cours intérieurs de bâtiments qu'il faudrait fermer préalablement au risque de créer des indéterminations de modèles. De plus, le transport en hauteur n'est pas négligeable dans la dispersion.

L'article de (Tominec et al., 2021) utilise la technique LS-RBF-FD. La méthode LS-RBF-FD est une généralisation des RBF-FD. Elle repose sur deux ensembles de points de calcul $X$ et $Y$ à $N_x$ et $N_y$ points.

$Y$ est informé de la physique et contient les contraintes de conditions limites des formes géométriques. $X$ est moins dense que $Y$ et couvre le domaine physique sans avoir besoin d'être confiné aux bords du domaine ($X$ peut avoir des points qui déborde du domaine, ou encore en intérieur de domaine uniquement). Ainsi à la manière des RBF-FD, il est possible de construire une matrice de différentiation D qui modélise discrètement par RBF-FD les opérateurs $\mathcal{L}$ et $\mathcal{B}$ définis dans l'intérieur de $\Omega$, $\Omega°$ et ses bords $\partial\Omega$ de sorte que la solution du système comparable à (2) s'exprime par :

$$\bar{u}_a = \arg\min_{\bar{v}} \| D\bar{v} - \bar{f} \|^2,$$

Avec $\bar{u}_a \in \mathbb{R}^{N_x}$, et D une matrice de différentiation $N_y \times N_x$ avec,

$$D(y_k) = \begin{cases} L(y_k) \text{ si } y_k \in \Omega° \\ B(y_k) \text{ si } y_k \in \partial\Omega \end{cases}$$

$$\bar{f} = \begin{cases} s(y_k) \text{ si } y_k \in \Omega° \\ 0 \text{ si } y_k \in \partial\Omega \end{cases}$$

Où L et B sont les matrices de différentiation obtenues par RBF-FD pour les opérateurs spatiaux $\mathcal{L}$ et $\mathcal{B}$. Et $y_k \in Y = \{y_k\}_{k=1}^{N_y}$ un point de Y.

L'article de Tominec et al., 2021 utilise des équations diffusives à diffusion uniforme avec des conditions limites mixtes (Dirichlet, Neumann). Aucune solution tridimensionnelle n'est exposée ni discutée. La modélisation de la pollution atmosphérique n'est pas évoquée. Les problèmes inverses ne sont pas abordés.

Le principe des RBF et notamment RBF-FD est présentée entre autres dans (Barnett, 2015) p. 2-13.

**Création de modèles d'équations aux dérivées partielles supportés par RBF**

Les RBF ont des propriétés d'interpolation spatiales. Si on considère un ensemble fini $Y \subset \Omega$ qui partitionne $\Omega$ et

permet de réprésenter les variations de y dans l'équation (3) avec $y_j \in Y = \{y_j\}_{j=1}^{N_y}$ les éléments de Y, et qu'on considère de plus deux ensembles de noeuds de calcul définis dans l'intérieur du domaine $\Omega°$ et sur son bord $\partial\Omega$, Le premier ensemble étant un ensemble X de noeuds couvrants $\Omega$, avec $N_x$ = card(X) - ces noeuds sont utilisés plus loin comme centre de RBF pour réaliser des approximations locales d'interpolation à la manière de l'équation (2). La distribution des noeuds fait appel à un algorithme de minimisation d'énergie qui utilise la suite pseudo aléatoire de Halton pour couvrir le domaine spatial de manière satisfaisante.

Un ensemble Y de noeuds d'évaluation munie de deux sous-ensembles de noeuds $Y_{\Omega°}$ et $Y_{\partial\Omega}$ correspondant respectivement aux noeuds intérieurs aux domaines c'est à dire dans $Y_{\Omega°}$, et ceux présents en bord, $Y_{\partial\Omega}$. Y est généré d'une manière similaire à X. On note $N_{y_{\Omega°}}$ = card($Y_{\Omega°}$) et $N_{y_{\partial\Omega}}$ = card($Y_{\partial\Omega}$), avec $N_y$ = card(Y) = $N_{y_{\Omega°}}$ + $N_{y_{\partial\Omega}}$.

**Méthodes basées sur les RBF-FD** :

L'idée dans cette méthode est d'approximer les contraintes imposées sur une variable u régie par une équation aux dérivées partielles en un point de l'espace y = $y_k \in Y$. Des centre de bases/points d'EDP (X) voisins du point d'évaluation servent à exprimer ces contraintes. Cet ensemble de points voisins dans X forment un ensemble de points centrés sur $y_k \in Y$. Cet ensemble est appelé $S_{y_k} \subset X$ et qualifié de stencil. Soit $x^{y_k} \in S_{y_k}$, il est possible d'interpoler localement une variable $u \in \Omega$ telle que $\forall x^{y_k} \in S_{y_k} \subset X$,

$$[Eq.\ 7]\ u_a(x^{y_k}) = \sum_{i=1}^{n} w_i \phi(\| x^{y_k} - x_i \|) + \sum_{i=1}^{m} \lambda_i p_i(x^{y_k}).$$

Avec $w_i$ et $\lambda_i$ les coefficients de pondération de l'approximation et les $p_i$ des monômes servant à régulariser l'approximation pour imposer $\sum_{i=1}^{n} w_i p_j(x_i) = 0 \ \forall j \in$ {1, ..., m}. On note $u_a$ la fonction interpolante locale de u. On note $\overline{u_a}(y_k)$ le vecteur des $u_a(x_i^{y_k})$ pour tout $x_i^{y_k} \in S_{y_k}$. L'interpolation locale (7) peut être vectorisée telle que,

$$[Eq.\ 8]\ \underbrace{\begin{pmatrix} \Phi(y_k) & P \\ P^T & 0 \end{pmatrix}}_{A(y_k)} \begin{pmatrix} \overline{w} \\ \overline{\lambda} \end{pmatrix} = \begin{pmatrix} \overline{u_a}(y_k) \\ \overline{0} \end{pmatrix},$$

Où $\Phi$ est la matrice de collocation RBF du stencil $S_{y_k}$ telle que $\forall x_j \in \{x_j\}_{i=1}^{n} = S_{y_k}$,

$$[Eq.\ 9]\ \Phi(y_k) = \begin{bmatrix} \phi(\|x_1 - x_1\|) & ... & \phi(\|x_n - x_1\|) \\ \vdots & \ddots & \vdots \\ \phi(\|x_n - x_n\|) & ... & \phi(\|x_n - x_n\|) \end{bmatrix}$$

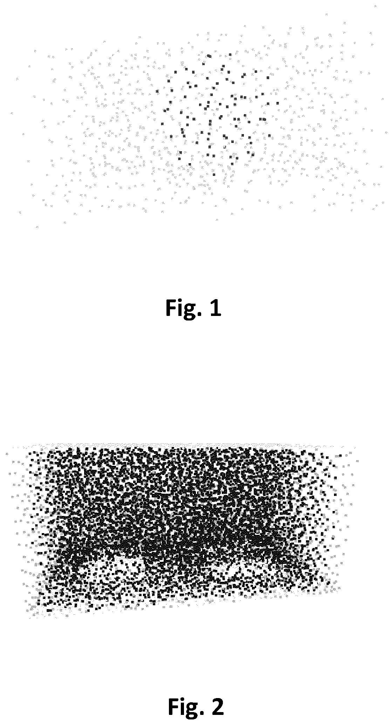

[Fig. 1] Un exemple de stencil est visible en figure 1. Il est composé de X points, centrés autour de $y_k \in Y$ parmi d'autres points.

Les vecteurs $\overline{w}$ et $\overline{\lambda}$ s'obtiennent en inversant la matrice $A(y_k)$,

$$[Eq.\ 10]\ \begin{pmatrix} \overline{w} \\ \overline{\lambda} \end{pmatrix} = A(y_k)^{-1} \begin{pmatrix} \overline{u_a}(y_k) \\ \overline{0} \end{pmatrix}$$

D'une manière similaire, on peut interpoler localement un opérateur différentiel $\mathcal{L}$ sur u en un point $y_k \in Y$ tel que,

$$[Eq.\ 11]\ \mathcal{L}u_a(y) = \sum_{i=1}^{n} w_i \mathcal{L}\phi(\| y - x_i \|) + \sum_{i=1}^{m} \lambda_i \mathcal{L}p_i(y)$$

L'équation 11 peut être reformulée à la manière de l'équation 8 en

$$[\text{Eq. 12}] \quad \mathcal{L}u_a(y_k) = (\mathcal{L}\Phi)^T(y_k)\overline{w} + (\mathcal{L}P)^T(y_k)\overline{\lambda}$$

En introduisant (10) dans (12) on obtient,

$$[\text{Eq. 13}] \quad \mathcal{L}u_a(y_k) = \left[\left((\mathcal{L}\Phi)^T(y_k), \ (\mathcal{L}P)^T(y_k)\right)A^{-1}\right]\binom{\overline{u_a}(y_k)}{\overline{0}}$$

Et en posant,

$$[\text{Eq. 14}] \quad \left(\overline{w}^{\mathcal{L}T}, \overline{\lambda}^{\mathcal{L}T}\right) = ((\mathcal{L}\Phi)(y_k))^T, \ (\mathcal{L}P)^T(y_k))A^{-1},$$

, on obtient après avoir enlevé les termes polynomiaux qui s'annulent,

$$[\text{Eq. 15}] \quad \mathcal{L}u_a(y_k) = \overline{w}^{\mathcal{L}T}\overline{u_a}(y_k)$$

Ce qui est équivalent à $\mathcal{L}u_a(y_k) = \overline{w}^{\mathcal{L}T}\left(u_a(x_0^{y_k}), \dots, u_a(x_n^{y_k})\right)^T, \ x_i^{y_k} \in S_{y_k} \subset X$

Pour exprimer les différences finies appliqués sur l'opérateur $\mathcal{L}u(y)|_{y=y_k}$ les vecteurs de poids $w^{\mathcal{L}}$ et $\lambda^{\mathcal{L}}$ sont trouvés en solutionnant le système

$$[\text{Eq. 16}] \quad \begin{bmatrix} \Phi & P \\ P^T & 0 \end{bmatrix}\begin{bmatrix} \overline{w}^{\mathcal{L}} \\ \overline{\lambda}^{\mathcal{L}} \end{bmatrix} = \begin{bmatrix} (\mathcal{L}\phi)(y = y_k) \\ (\mathcal{L}p)(y = y_k) \end{bmatrix}$$

Il est ainsi possible d'approximer chaque opérateur différentiel $\mathcal{L}u(y_k) \ \forall \ y_k \in Y$ comme somme pondérée de n valeurs voisines de u définies dans X. Il est possible de réaliser cette approximation sur d'autres opérateurs différentiels tels que celui de conditions limites $\mathcal{B}$. Ainsi il est possible de créer une matrice de différentiation discrète D à dimensions $N_y \times N_x$ qui pour tout $y_k \in Y$ exprime les poids de différentiation qui s'y appliquent. Les poids sont stockés lignes à lignes tels que $\forall y_k \in Y$,

$$[\text{Eq. 17}] \quad D_{k,:} = \begin{cases} [0, \dots, w_1^{\mathcal{L}}, \dots, w_n^{\mathcal{L}}, \dots 0] \text{ si } y_k \in \Omega^o \\ [0, \dots, w_1^{\mathcal{B}}, \dots, w_n^{\mathcal{B}}, \dots 0] \text{ si } y_k \in \partial\Omega \end{cases}$$

Les 0 étant ajoutés dans le vecteur de poids de D pour les noeuds de X ne faisant pas partie du stencil $S_{y_k}$.

**Définition générale de l'invention**

L'invention s'intéresse aux modélisations notamment la modélisation inverse de la pollution atmosphérique urbaine et utilise une modélisation par LS-RBF-FD. On utilise des LS-RBF-FD pour exprimer le modèle direct de pollution atmosphérique et un solveur de moindre carrés pour obtenir la solution, notamment pour des équations de transport de type advection-diffusion, là où la méthode RBF-FD ne fait que de la collocation.

L'invention offre une réduction de modèle sans méthode d'apprentissage, en choisissant un espace de solution X petit, ce qui permet d'accélérer le calcul et est utile pour l'inversion.

Un avantage de cette méthode est la réduction de la taille de l'inconnue constituée par le vecteur source : le problème est ainsi mieux posé.

De manière générale, les RBF permettent de projeter les variables recherchées sur des espaces de petites dimensions.

L'invention consiste aussi en une résolution quadratique adjointe originale et efficace. Elle est mise en oeuvre efficacement sur un cas d'étude simple.

L'invention porte sur une modélisation inédite de transport de polluants atmosphérique avec la méthode LS-RBF-FD. Cette méthode est rapide et a une capacité inhérente à opérer de la réduction de modèle ce qui ouvre la voie à la remontée à la source.

Ainsi, pour améliorer les techniques de recherche de sources existantes, il est proposé un procédé de détermination de coordonnées dans l'espace d'une source à l'origine d'un phénomène de dispersion dans un domaine, le phénomène de dispersion étant approché par un système d'équations aux dérivées partielles, le procédé comprenant des étapes, mises en oeuvre par ordinateur,

- d'obtention de mesures quantifiant chacune en un point de l'espace du domaine et à un instant donné une variable d'état modélisée par le système d'équations aux dérivées partielles audit point et audit instant et
- de minimisation itérative des différences entre les mesures et les calculs du système d'équations pour localiser une position de ladite source.

Le domaine est typiquement une partie de canopée urbaine, c'est-à-dire un quartier d'une ville ou une zone périurbaine, dont on modélise l'atmosphère, jusqu'à environ 50 m au-dessus du sol, par exemple. La source de diffusion peut être une voiture à l'arrêt qui émet des gaz d'échappement, par exemple.

Le procédé est particulier car le système d'équations est exprimé par différences finies supportées par des fonctions de base radiales, le système d'équations étant résolu en moindres carrés, à l'aide d'un solveur de moindres carrés, le système d'équations ayant fait l'objet d'une résolution quadratique adjointe en choisissant des fonctions de base radiale parmi les fonctions splines polyharmoniques, les fonctions inverses multi-quadriques, ou les fonctions gaussiennes, avec des polynômes de régularisation d'ordre 1 ou plus.

On tire profit du fait que les LS-RBF-FD ont une discrétisation suréchantillonée et permettent une résolution d'un problème de moindres carrés.

L'invention s'appuie sur la distinction de deux ensembles de points de calculs $X$, $Y$ dont l'un a un cardinal supérieur à l'autre d'un facteur au moins 3.

La méthode utilisée garantit la stabilité numérique sur le processeur qui mène les calculs.

Grâce à cette méthode fondée sur les LS-RBF-FD, on peut prendre un espace d'approximation (X) peu fin, tout en obtenant des solutions de qualité. Ce choix permet de réduire la taille de l'inconnu (les valeurs du vecteur source recherché) et d'accélérer les calculs.

Elle utilise habilement un phénomène de relaxation des contraintes, et dispose de plus de points d'évaluation que d'inconnues. On recherche un terme source $\overline{S}$ qui minimise l'écart à des mesures quand on applique le modèle physique sur le terme source.

Selon un autre aspect de l'invention, celle-ci consiste en un procédé de détermination de coordonnées dans l'espace d'une source de pollution atmosphérique en milieu urbain à l'origine d'un phénomène de dispersion dans la canopée urbaine sur la base d'un ensemble de mesures localisées fournies par un réseau de capteurs à bas coût, le phénomène de dispersion étant approché par un système d'équations aux dérivées partielles, le procédé comprenant des étapes, mises en oeuvre par ordinateur, d'obtention de mesures quantifiant chacune en un point de l'espace du domaine et à un instant donné une variable d'état modélisée par le système d'équations aux dérivées partielles audit point et audit instant et de minimisation itérative des différences entre les mesures et les calculs du système d'équations pour localiser une position de ladite source.

Elle est remarquable pour les raisons mentionnées ci-dessus : le système d'équations est exprimé par différences finies supportées par des fonctions de base radiales, le système d'équations étant résolu en moindres carrés, à l'aide d'un solveur de moindres carrés, le système d'équations ayant fait l'objet d'une résolution quadratique adjointe en choisissant des fonctions de base radiale parmi les fonctions splines polyharmoniques, les fonctions inverses multi-quadriques, ou les fonctions gaussiennes.

Selon des caractéristiques avantageuses et optionnelles

- la détermination de coordonnées peut être menée pour une identification de sources de pollution pour les services liés aux risques tels que les pompiers ou l'armée,
- les étapes d'obtention des mesures localisées et de minimisation des différences entre les mesures et les calculs peuvent être menées dans un domaine spatial décrit avec des conditions limites de Neumann et Dirichlet.
- le domaine peut être caractérisé, outre par ses limites, également par des données de champ dans l'intérieur du domaine.
- le phénomène de dispersion peut être une dispersion de polluants et que ledit transport est modélisé par une équation d'advection-diffusion.
- le phénomène de dispersion peut être une diffusion de chaleur à partir d'un point chaud dans un système énergétique.

- le phénomène de dispersion peut être une diffusion sonore dans un environnement complexe.
- le solveur des moindres carrés peut être L-BFGS-B ou LSQR.
- la fonction spline polyharmonique utilisée peut être PHS5, et au-delà de cette fonction spécifique on privilégie les fonctions splines polyharmoniques d'ordre au moins 3, et de préférence d'ordre impair. On peut utiliser d'autres RBF comme les fonctions inverse multiquadriques ou les fonctions gaussiennes.
- la minimisation itérative des différences entre les mesures et les calculs du système d'équations peut être menée pour déterminer également une intensité de ladite source.

**Liste des figures** :

L'invention sera mieux comprise et d'autres avantages apparaitront à la lecture de la description qui va suivre donnée à titre non limitatif et grâce aux figures annexées parmi lesquelles :

La figure 1 est la représentation d'un stencil, ou ensemble de points voisins en lesquels on approxime les contraintes imposées audit point sur une variable régie par une équation aux dérivées partielles.
La figure 2 est la représentation de l'ensemble de points du domaine, assez dense, pour lesquels les contraintes des conditions limites et les règles physiques applicables sont donnés dans le modèle.
La figure 3 est la représentation d'un mode de réalisation d'un procédé selon l'invention.
La figure 4 est la représentation de résultats (en partie gauche) de la méthode, mise en oeuvre pour un cas particulier (représenté en partie droite).
La figure 5 est la représentation d'autres résultats pour le même cas particulier.
Les figures 6 et 7 sont la représentation d'autres résultats pour le même cas particulier avec utilisation préalable de résultats simulés.
La figure 8 est la représentation de résultats obtenus dans le cadre d'une extension de la méthode.

**La particularité de la LS-RBF-FD et ses avantages** :

Les LS-RBF-FD posent deux ensembles de calculs distinct tels que $Y \neq X$ et $\text{card}(Y)/\text{card}(X) \geq 3$. La valeur de 3, voire plus étant un seuil qui s'est avéré raisonnable.

La technique consiste ensuite à résoudre un problème de moindres carrés dans le cas de l'ADEDP stationnaire présentée,

$$[Eq.\ 18]\ \overline{u_a} = \arg\min_{\overline{u}} \| D\overline{u} - \overline{f} \|^2,$$

avec $(\overline{u_a}, \overline{u}) \in \mathbb{R}^{N_x} \times \mathbb{R}^{N_x}$, et $\overline{f} \in \mathbb{R}^{N_y}$ le terme source aggloméré défini dans les coordonnées de Y comportant les conditions limites nulles de Neumann et Dirichlet et le terme source telle que

$$[Eq.\ 19]\ f_{k:} = \begin{cases} s(y_k) \text{ si } y_k \in Y_{\Omega^\circ} \subset \Omega \\ 0 \text{ si } y_k \in Y_{\partial\Omega} \end{cases}$$

La formulation des moindres carrés de l'équation 18 a plusieurs avantages :

- Elle aide à relaxer les contraintes d'égalité sur les conditions limites de type $u = d(y)$ sur $\Gamma_D$ et $\nabla u \cdot \overline{n} = t(y)$ sur $\Gamma_N$ pour les conditions de Neumann et Dirichlet respectivement.
- La stabilité de $u_h$ est encouragée par le fait que le problème de l'équation 18 est surdéterminé, avec plus de points d'évaluation dans Y que d'inconnues dans X.
- La méthode est robuste même sur des grilles de calcul peu denses.
- La matrice de différentiation D est très creuse (elle comporte beaucoup de 0) et donc la résolution se fait en un temps réduit.
- Il est possible de choisir un espace de solution X très petit, 5 fois moins denses que Y par exemple pour projeter le modèle sur un espace de petite dimension particulièrement adapté aux problèmes inverses.

$$D(y_k) = \begin{cases} L(y_k) \text{ si } y_k \in Y_{\Omega^\circ} \subset \Omega \\ B(y_k) \text{ si } y_k \in Y_{\partial\Omega} \end{cases}$$

De par la définition de D avec , on peut extraire de D deux sous matrices, $D_{\Omega^\circ}$ et $D_{\partial\Omega}$ qui empile respectivement les $L(y_k)$ pour tous les $y_k \in Y_{\Omega^\circ}$ et $B(y_k)$ pour tous les $y_k \in Y_{\partial\Omega}$.

La formulation (18) admet une solution unique quand D est de rang plein avec [Eq. 20] $\overline{u}_a = D^+\overline{f}$, avec $D^+ = (D^TD)^{-1}D^T$, la pseudo-inverse gauche de D. En pratique le problème de l'équation 18 est résolu par un solveur des moindres carrées. Les solveurs L-BFGS-B (variante B de l'algorithme Limited-memory BFGS - pour Broyden-Fletcher-Goldfarb-Shanno) et LSQR (algorithme des moindres carrés) ont été testés. Le plus rapide s'est avéré être LSQR. Cependant de l'équation 20 on peut construire une condition d'optimalité intéressante pour le problème inverse,

$$[\text{Eq. 21}] \; Eu_a - D_{\Omega^\circ}^T \overline{s}(Y_{\Omega^\circ}) = 0, \; \text{avec } E = D_{\Omega^\circ}^T D_{\Omega^\circ} + D_{\partial\Omega}^T D_{\partial\Omega}.$$

[Fig. 2] La figure 2 est une vue tridimensionnelle d'un domaine Y généré avec $N_y$=15000. On voit les noeuds intérieurs dans $\Omega^\circ$, ainsi que des noeuds de Neuman et des noeuds de Dirichlet.

Ainsi, on a présenté une modélisation eulérienne directe de la pollution qui permet de calculer une dispersion de polluants en donnant en entrée une topologie et des données météorologiques hétérogènes. Le calcul est assuré par LS-RBF-FD. La solution au problème de l'équation 1 stationnaire est calculée efficacement par un solveur de moindres carrés.

## Modélisation Inverse, une approche adjointe

Le problème inverse consiste à estimer simultanément le terme source $\overline{s} \in \mathbb{R}^{N_x}$ et la concentration en polluants $\overline{u} \in \mathbb{R}^{N_x}$ en disposant d'un nombre de mesures limités. $\overline{y}_{mes} \in \mathbb{R}^{N_s}$ avec $N_s$, le nombre de mesures localisées dans $\Omega^\circ$. Si un terme source $\overline{s}$ est connu dans X il est possible d'estimer la source en tout point $z \in Y_{\Omega^\circ}$ en utilisant la formule d'interpolation de l'équation 16 évaluée avec des opérateurs différentiels neutres (sans application de dérivée). Ainsi on peut construire un opérateur d'interpolation $\Psi_s$ qui permet d'approximer dans X une source définie dans $Y_{\Omega^\circ}$ tel que, $\overline{s}(Y_{\Omega^\circ}) = \Psi_s \overline{s}$..

L'opérateur de mesure noté C est défini similairement comme un opérateur d'interpolation de l'espace de champ X vers l'espace de mesures tel que

$$[\text{Eq. 22}] \; \overline{y} = C\overline{u},$$

avec $\overline{u}$, la sortie de modèle, $\overline{y}$ la sortie de modèle ramenée dans l'espace des mesures localisées dans $\Omega^\circ$.

Aux fins de l'estimation du terme source, on résout le problème de moindres carrés suivant - il s'agit de la minimisation régularisée d'erreur de moindres carrées entre la sortie du modèle LS-RBF-FD et les mesures -

$$[\text{Eq. 23}] \quad \min_{\overline{s},\overline{u}} \mathcal{J}(\overline{s}, \overline{u}) = \frac{1}{2} \parallel C\overline{u} - \overline{y}_{mes} \parallel^2_{R^{-1}} + \frac{1}{2} \parallel \overline{s} \parallel^2_{B^{-1}}$$
$$\text{sous } E\overline{u} - D_{\Omega^\circ}^T \Psi_s \overline{s} = 0,$$

où R et B sont respectivement des matrices de covariance d'erreur de mesure et de régularisation.

La solution optimale $(\overline{s}^*, \overline{u}^*)$ solution de ce problème d'estimation du terme source est la solution du système linéaire,

$$[\text{Eq. 24}] \begin{pmatrix} K & E \\ E & -Q \end{pmatrix} \begin{pmatrix} \overline{u} \\ \overline{\lambda} \end{pmatrix} = \begin{pmatrix} C^T R^{-1} \overline{y}_{mes} \\ \overline{0} \end{pmatrix},$$

où $K = C^T R^{-1} C$, $Q = D_{\Omega^\circ}^T \Psi_s B \Psi_s^T D_{\Omega^\circ}$. De plus $\overline{s}^* = B \Psi_s^T D_{\Omega^\circ} \overline{\lambda}^*$ où $\overline{\lambda}^*$ est l'adjoint de $\overline{u}^*$. Considérant que la matrice E est positive définie, $\bar{u}^* = [E + QE^{-1}K]^{-1}QE^{-1}C^TR^{-1}\bar{y}_{mes}$ et $\bar{\lambda}^*$ est donnée par $\lambda^* = -E^{-1}C^TR^{-1}(C\bar{u}^* - \bar{y}_{mes})$.

Pour s'en convaincre, on introduit le lagrangien de l'équation 23.,

$$L(\bar{s}, \bar{u}, \bar{\lambda}) = \frac{1}{2} \parallel C\bar{u} - \bar{y}_{mes} \parallel_{R^{-1}}^2 + \frac{1}{2} \parallel \bar{s} \parallel_{B^{-1}}^2 + \lambda^T(E\bar{u} - D_{\Omega^\circ}^T \Psi_s \bar{s})$$

. La théorie de Lagrange permet de déduire les conditions nécessaires d'optimalité avec :

$$[\text{Eq. 25}] \ \nabla_{\bar{u}}L = 0 \Leftrightarrow C^TR^{-1}(C\bar{u} - \bar{y}_{mes}) + E\bar{\lambda} = 0$$

$$[\text{Eq.26}] \ \nabla_{\bar{s}}L = 0 \Leftrightarrow B^{-1}\bar{s} - \Psi_s^T D_{\Omega^\circ}\bar{\lambda} = 0,$$

$$[\text{Eq. 27}] \ \nabla_{\bar{\lambda}}L = 0 \Leftrightarrow E\bar{u} - D_{\Omega^\circ}^T \Psi_s B\bar{s} = 0,$$

Où l'équation 25 est l'équation adjointe du modèle. Si E est définie positive, et ainsi inversible, $\bar{\lambda}^*$ peut être explicitement calculé comme $\bar{\lambda}^* = -E^{-1}C^TR^{-1}(C\bar{u}^* - \bar{y}_{mes})$. De l'équation 26 on obtient $\bar{s}^* = B\Psi_s^T D_{\Omega^\circ}\bar{\lambda}^*$.

Et dans l'équation 27 en introduisant l'expression de $\bar{s}^*$, on obtient $E\bar{u}^* - Q\bar{\lambda}^* = 0$. Finalement, $\bar{u}^* = [E + QE^{-1}K]^{-1}QE^{-1}C^TR^{-1}\bar{y}_{mes}$ en introduisant l'expression de $\bar{\lambda}^*$. $E + QE^{-1}K$ est toujours inversible si E est définie positive car la matrice symétrique $QE^{-1}K$ est au moins semi-définie positive.

L'inversibilité de la matrice E est garantie si et seulement si la matrice de différentiation D dans l'équation 18 est de rang plein. Cette condition peut être satisfaite par le choix d'une cardinalité de X et Y adaptée. Le system linéaire de l'équation 24 de taille $2N_x \times 2N_x$ est résolu sans inversion explicite de matrices pour accélérer les calculs sur des grands domaines notamment par l'utilisation d'un solveur de moindres carrées LSQR.

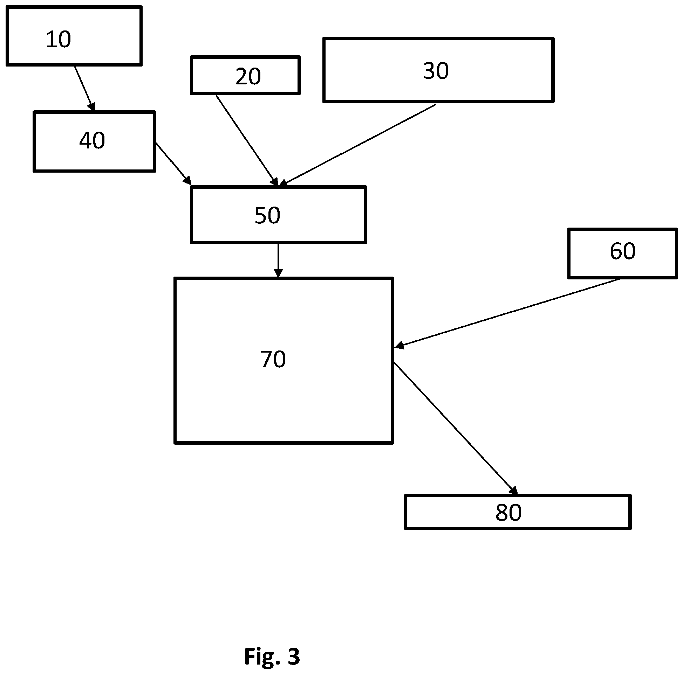

[Fig. 3] Ainsi le principe de l'invention est représenté en figure 3. Le processeur de données reçoit des informations géométriques 10, un modèle d'équations aux dérivées partielles continues 20, et des données de champs d'entrée 30 - qui sont données pour l'intérieur du domaine.

Dans le mode de réalisation principal, ces données de champ d'entrée sont des données de météorologie, mais dans un mode de réalisation où on s'intéresserait à la diffusion de la chaleur dans un matériau, la densité dans le matériau, la charge électrique, ou encore la salinité.

Les informations géométriques 10, le modèle d'équations aux dérivées partielles continues 20, et les données de champs d'entrée 30 sont des données brutes d'entrée du modèle.

Les informations géométriques 10 sont traitées de manière à fournir des conditions limites au domaine, au cours d'une étape 40. On obtient ainsi des données d'entrées traitées, par la création d'un domaine de calcul, incluant les conditions limite.

Au cours d'une étape 50, on effectue une discrétisation du modèle d'équations aux dérivées partielles 20, pour le discrétiser par les fonctions de base radiale aux différences finies LSRBF-FD. Cela est mené en tenant compte à la fois du domaine de calcul établi au cours de l'étape 40, et des données de champ d'entrée 30. On obtient des opérateurs physiques discrétisés.

Le procédé comprend, naturellement, l'obtention des mesures 60.

Puis, sur la base des mesures 60 et des opérateurs physiques discrétisés obtenus au cours de l'étape 40, on met en oeuvre le modèle inverse 70, incluant une résolution itérative fondée sur l'explicitation, dans le processeur et la mémoire associée, de l'équation adjointe des opérateurs discrétisés par inversion de matrice, les fonctions de base radiale ayant été choisies aux fins de rendre cette inversion possible. Le modèle inverse comprend ainsi une résolution d'un problème des moindres carrés aux fins de la résolution itérative : on minimise une valeur représentative d'une erreur entre les estimations par le modèle et les mesures.

A l'issue du modèle inverse 70, on obtient les coordonnées - c'est-à-dire les positions - des sources (ou de la source, dans le cas d'une source unique) ainsi qu'optionnellement les vitesses d'émission estimées. On obtient aussi optionnellement les intensités (souvent des concentrations) aux différents points du domaine. Il s'agit des résultats 80.

**Exemple de mise en oeuvre**

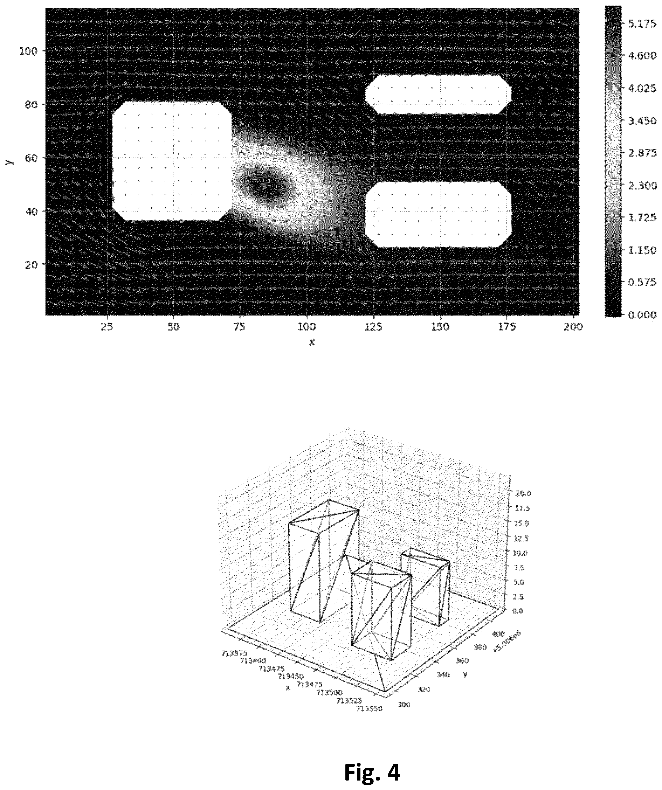

[Fig. 4] Le domaine physique tridimensionnel consiste en un domaine comportant trois bâtiments d'une hauteur respectivement de 10, 15 et 12 mètres. Les dimensions de domaine sont $L_x = 205$ m $\times$ $L_y = 120$ m $\times$ $L_z = 105$ m. Le domaine tridimensionnel est représenté en partie droite de la figure 4. La figure 2 qui a été mentionnée plus haut est une représentation de la distribution des noeuds d'évaluation Y.

On utilise les fonctions de bases radiales PHS5, selon l'équation

$$[Eq.\ 28]\ \phi(y) = r^5,\ \text{with}\ r = \| y - x_i \|.$$

Des polynômes de régularisation d'ordre 2 sont utilisés. Le modèle direct LS-RBF-FD de l'équation 21 est utilisé avec 15000 noeuds d'évaluation pour assurer une bonne résolution. L'ensemble X comporte beaucoup moins de noeuds avec $N_x = 2060$ ce qui mène naturellement à une réduction de modèle qui permet de limiter la taille des vecteurs d'inconnues $\overline{s}$ et $\overline{u}$. Des conditions limites de Neumann de flux nul sont assignées au sol et aux bords des bâtiments ainsi qu'au plafond du domaine de simulation tandis que des conditions de Dirichlet sont imposées sur les autres bords du domaine. La taille de stencil est de 90, l'ordre maximal de régularisation des polynômes dans l'équation 7 atteint 2. Les matrices R et B sont choisis comme diagonales avec $R = rI_{N_s}$ et $B = bI_{N_x}$ où $I_N$ désigne une matrice identité de taille $N. \times N.$ et où r et b sont des coefficients diagonaux de régularisation. Dans les exemples présentés, r = 1, b = 0.15.

[Fig. 4] La figure 4 présente, à gauche le champ de concentration en polluants (teinte) et le champ de vent (flèches) à 2 m de hauteur au-dessus du sol. A droite, on a représenté le domaine étudié, comportant trois bâtiments de tailles différentes. La source est à environ deux mètres de hauteur.

Des données météorologiques sont utilisées comme informations d'entrée dans les calculs. Les champs de vents moyens sont fournis par le logiciel PMSS (Parallel-Micro-SWIFT-SPRAY) où est utilisé son modèle eulérien de champ de vent Micro-SWIFT-M quasi stationnaire qui résout les équations de Navier-Stokes sur le principe de la moyenne de Reynolds pour en calculer un champ de vent moyen U et une diffusion K qui traduit les fluctuation turbulentes de vents assimilables sur le temps long à un phénomène diffusif. Des données météorologiques calculées par des modèles autres que Micro-SWIFT-M pourraient en principe convenir au modèle LS-RBF-FD présenté précédemment.

Les mesures $\overline{y}_{mes}$ sont simulées par le modèle « en avant » LS-RBF-FD sur un domaine de calcul fin et avec ajout de bruit tel que

$$[Eq.\ 29]\ \overline{y}_{mes} = \overline{y}^0 + \overline{\epsilon}^{obs}\ \text{avec,}\ \overline{\epsilon}^{obs} \sim \mathcal{N}(0, \sigma^2)$$

où $\overline{y}^0$ est la concentration de référence en polluant retournée par un modèle LS-RBF-FD fin avec $N_y = 50000$, $N_x = 15648$ (voir la figure 3, à gauche) et $\overline{\epsilon}^{obs}$, un bruit gaussien de variance $\sigma^2$, avec $\sigma = 0.002$. Le terme source véritable utilisé pour générer le champ de concentration de référence est une Gaussienne définie dans $\Omega°$:

$$[Eq.\ 30]\ s: x \mapsto a_s \exp\big((x - x_s)/(\sqrt{2}\sigma_s)\big)^2,\quad x \in \Omega°$$

avec

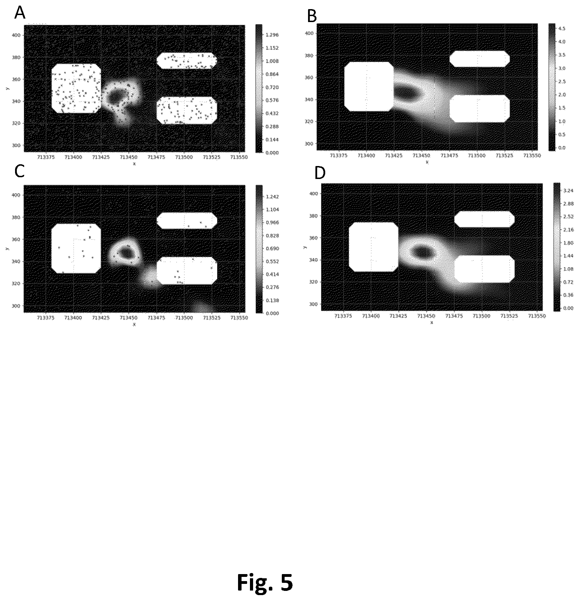

$a_s$, $x_s$, $\sigma_s$ = 1, [$0.42L_x$, $0.39L_y$, $0.02L_z$] et [8 m, 8 m, 8 m]. Le terme source est montré en coupe 2D sur la figure 5.

Deux expériences d'inversion ont été réalisées avec du bruit additif et en utilisant 1500 et 200 mesures distribuées dans tout le domaine tridimensionnel de calcul.

[Fig. 5] Les termes sources estimées, ainsi que les champs de concentration résultants sont présentés en figure 5. Les positions de source $\hat{x}_s$ sont bien estimées dans les deux cas avec des erreurs inférieures à 5 m sur le plan x - y pour le cas à 1500 mesures partie A de la figure tandis que $\hat{X}_s$ est déplacé de 25 m selon x et 10 m selon y dans la partie C de la figure. Quelques artefacts d'inversion sont visibles en partie C où la source atteint 0,5 unités au lieu de 0 près du bâtiment situé au sud-est. Cependant les sources sont assez bien estimées pour reconstruire des motifs de champs de pollution en partie B et D, proches du champ de référence retourné par le modèle fin visible en figure 2.

Le champ résultant issu d'une estimation du terme source à 1500 mesures (partie B de la figure 5) reconstruit cependant mieux le champ en ordre de grandeur qu'avec 200 mesures (partie D de la figure 5) car plus d'information est apportée.

Plusieurs paramètres peuvent impacter la qualité d'une estimation du terme source. Parmi eux, le nombre de noeuds dans X et Y et le poids de la régularisation dans le rapport bjr impacte le motif de la source estimée et son ordre de grandeur.

Le temps de calcul est raisonnablement court. Une fois la matrice opérateur D calculée, l'estimation de la source et de son champ résultant sont obtenues en environ 4 minutes sur cet exemple avec un processeur Intel Xeon E-2276M 6-coeurs et 32 Gb de RAM exécutant un programme python encore peu optimisé.

[Fig. 5] En figure 5, on a représenté, sur le quadrant A l'estimation de source avec 1500 mesures, sur le quadrant B un champ de concentration résultant, sur le quadrant C une estimation de source avec 200 mesures et sur le quadrant D un champ de concentration reconstruit à partir de 200 mesures. Les croix correspondent aux coordonnées planaires de mesures. Les résultats sont affichés à une hauteur de z = 2 m.

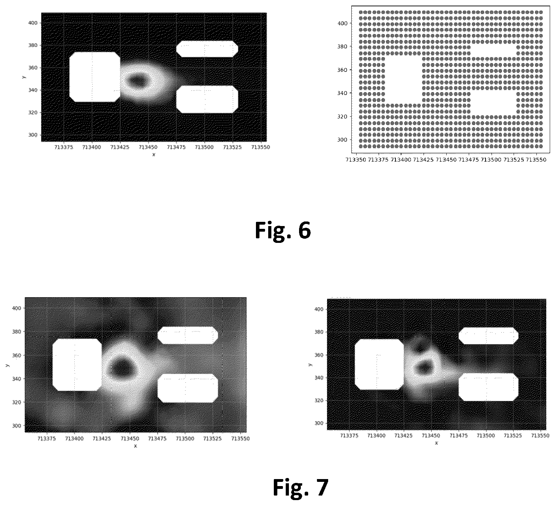

[Fig. 6] Le logiciel PMSS peut calculer de manière qualitative de la dispersion de polluants. En utilisant les données retournées par le modèle particulaires PMSS où le panache est généré avec une source ponctuelle (c'est à dire générée dans une seule maille) et avec beaucoup de particules de modèle PMSS on peut créer un champ de référence $\bar{y}_0$ de qualité (à gauche sur la figure 6) et servant à créer un jeu de mesures simulées : ici des mesures toutes situées sur un plan de domaine à 2,14 m de hauteur (à droite sur la figure 6). Il est alors possible de remonter à la source avec un modèle d'estimation LS-RBF-FD encore plus réduit (jusqu'à 626) points dans X et obtenir une estimation correcte de la source et de sa localisation en une trentaine de secondes.

Ainsi, à gauche sur la figure 6, on voit le champ de référence PMSS servant à créer des mesures simulées, la tranche affichée étant à 2,14 m de haut. A droite on voir la position de mesures simulées par PMSS : toute une tranche de domaine PMSS à 2,14 mètres de haut, 860 mesures ayant été fournies.

[Fig. 7] Des résultats d'estimation de source avec $N_x$ = 626 et 1865 points sont visibles en Ainsi, et montrent que la position de source est très précisément estimée, y compris avec un modèle d'inversion LS-RBF-FD très réduit à 626 points dans X (à gauche sur la figure 7). L'usage d'un modèle d'approximation LS-RBF-FD plus fin dans X ($N_x$ = 1865) évite cependant plus la présence d'artefacts de source (Ainsi, à droite sur la figure 7).

Ainsi, à gauche, sur la figure 7, on voit une estimation adjointe de source avec modèle d'inversion LS-RBF-FD très réduit : $N_x$ = 626 points. A droite, on a représenté une estimation adjointe de source avec modèle d'inversion LS-RBF-FD réduit à $N_x$ = 626 points.

La méthode adjointe basée sur des modèles RBF-FD fonctionne donc avec des mesures bruitées, provenant d'un modèle LS-RBF-FD très fin et produit des estimations de termes sources à 2060 inconnues disposant de 1500 ou 200 mesures dispersés dans le domaine.

Dans le cas où les mesures simulées sont fournies par PMSS, un modèle différent du modèle LS-RBF-FD, professionnellement développé et validé en soufflerie (Moussafir et al., 2004) et où les mesures sont situées à environ 2 mètres d'altitude, la localisation de la source est très rapide et très précise avec la méthode inverse présentée plus haut.

## Autres modes de réalisation

La procédure d'inversion peut intégrer un filtrage de Kalman qui permet alors de mettre à jour l'estimation en ajoutant des mesures sans avoir à refaire un calcul de moindres carrés sur tout un lot de mesures. Un filtre d'ensemble de Kalman peut être utilisé et permet de ne pas avoir à calculer explicitement d'inverses. Cela est notamment utilisé quand on s'intéresse au régime transitoire. Les filtres d'ensemble de Kalman sont adaptés aux problèmes de grandes dimensions.

Selon encore une autre variante, on procède à une procédure adjointe itérative : cela permet d'itérer vers la solution sans avoir à enregistrer en mémoire des matrices lourdes, et cela est donc adapté aux grands domaines.

Selon encore une autre, on met en place un schéma d'avancement temporel implicite efficient en calcul et utilisant un solveur physique pour faire évoluer les états de concentration en temps :

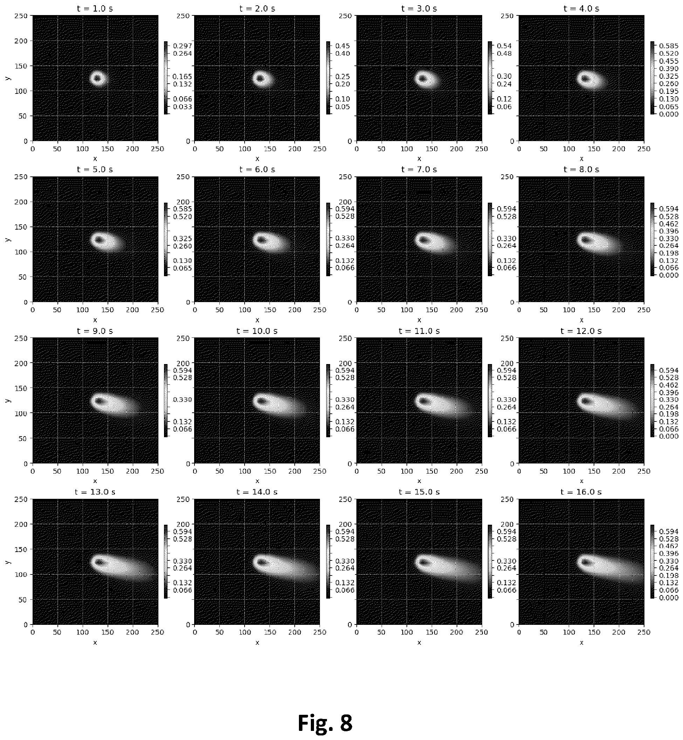

[Fig. 8] La figure 8 présente dans ce contexte un exemple d'évolution instationnaire LS-RBF-FD.

Le solveur physique transitoire sert de fondement aux perspectives d'identification transitoires. Il est formulé comme suit : le problème instationnaire créé un problème de minimisation similaire au problème stationnaire où la solution calculée, $\bar{u}_a$ pour rappel satisfait le problème de minimisation,

$$[\text{Eq. 31}] \ \min_{\bar{u}} \left\| D\bar{u} - \bar{f} \right\|$$

Dans le problème instationnaire, on ajoute à la contrainte de minimisation l'évolution temporelle de la variable de champ u.

$$[\text{Eq. 32}] \ \min_{\bar{u}} \left\| \partial_t \bar{u} + D\bar{u} - \bar{f} \right\|$$

Pour avancer en temps dans un schéma de calcul discret on considère un temps suivant t + 1 pour exprimer une dérivée discrète par un schéma implicite, le problème instationnaire se traduisant en,

$$[\text{Eq. 33}] \ \min_{\bar{u}(t+1)} \left\| D_0 \frac{\bar{u}(t+1) - \bar{u}(t)}{dt} + D\bar{u}(t+1) - \bar{f} \right\|$$

Avec, $D_0$ un opérateur RBF-FD à l'ordre de dérivée 0 (interpolateur) de $Y_{\Omega°}$ dans X quand il agit sur des noeuds $y_k$ $\in Y_{\Omega°}$ et 0 sinon. De sorte que,

$$[Eq.~34]~D_0(y_k) = \left\{ \begin{array}{l} \overline{w}^0~(y_k, X) \quad si~y_k \in Y_{\Omega°} \\ \overline{0} \quad sinon \end{array} \right.$$

où $\overline{w}^0~(y_k, X)$ est un jeu de poids RBF-FD pour réaliser une interpolation locale de $\overline{u}$ pour un stencil centré en $y_k$ à n - 1 voisins dans X.

Ainsi on résout

$$[Eq.~35]~\min_{\overline{u}(t+1)} \left\| \frac{D_0}{dt} \left[ \overline{u}(t+1) - \overline{u}(t) \right] + D\overline{u}(t+1) - \overline{f} \right\|,$$

avec

$$[Eq.~36]~\left\{ \begin{array}{lll} D_k & = L_k, & y_k \in Y_{\Omega°} \\ D_k & = B_k, & y_k \in Y_{\partial\Omega} \end{array} \right.$$

Et donc on résout

$$[Eq.~37]~\min_{\overline{u}(t+1)} \left\| \left( \frac{D_0}{dt} + D \right) \overline{u}(t+1) - \left( \frac{D_0}{dt} \overline{u}(t) + \overline{f} \right) \right\|$$

Cette expression est solvable avec LSQR ou encore LBFGS-B, gradients conjugués ou d'autres solveurs.

La modélisation inverse fondée sur LS-RBF-FD est applicable à toute recherche d'inconnues, termes sources ou encore variable de champ dans des équations aux dérivées partielles. Ainsi, cela peut être mis en oeuvre pour une identification (localisation) de points chaud dans les batteries, une estimation de source dans un contexte NRBC-E (par exemple la contamination biologique/chimique dans un réseau d'eau, une fuite provoquée, etc.)

Pour le problème de la pollution, la méthode est utile pour une identification de sources de pollution pour les services liés aux risques (pompiers, armée, etc).

L'invention peut aussi servir à la localisation de sources acoustiques en environnement complexe.

**Liste des références citées**

Barnett, G.A., 2015. A Robust RBF-FD Formulation based on Polyharmonic Splines and Polynomials. University of Colorado Boulder.

Defforge, C., 2019. Data assimilation for micrometeorological applications with the fluid dynamics model Code_Saturne. Paris-Est, Paris.

Flyer, N., Lehto, E., Blaise, S., Wright, G.B., St-Cyr, A., 2012. A guide to RBF-generated finite différences for nonlinear transport: Shallow water simulations on a sphere. J. Comput. Phys. 231, 4078-4095. https://doi.org/10.1016/j.jcp.2012.01.028

Fornberg, B., Flyer, N., 2015. A Primer on Radial Basis Functions with Applications to the Geosciences, Society for Industrial and Applied Mathematics. ed.

Khodayi-mehr, R., 2019. Model-Based Learning and Control of Advection-Diffusion Transport Using Mobile Robots 285.

Kumar, P., Feiz, A.-A., Singh, S.K., Ngae, P., Turbelin, G., 2015. Reconstruction of an atmospheric tracer source in an urban-like environment. J. Geophys. Res. Atmosphères 120, 12589-12604. https://doi.org/10.1002/2015JD024110

Liu, J., Li, X., Hu, X., 2019. A RBF-based differential quadrature method for solving two-dimensional variable-order time fractional advection-diffusion équation. J. Comput. Phys. 384, 222-238. https://doi.org/10.1016/j.jcp.2018.12.043

Mons, V., Margheri, L., Chassaing, J.-C., Sagaut, P., 2017. Data assimilation-based reconstruction of urban pollutant release characteristics. J. Wind Eng. Ind. Aerodyn. 169, 232-250. https://doi.org/10.1016/j.jweia.2017.07.007

Moussafir, J., Oldrini, O., Tinarelli, G., Sontowski, J., 2004. A new operational approach to deal with dispersion around obstacles : the MSS (Micro Swiftt Spray) software suite. 5.

Septier, F., Armand, P., Duchenne, C., 2020. A bayesian inference procedure based on inverse dispersion modelling for source term estimation in built-up environments. Atmos. Environ. 242, 117733. https://doi.org/10.1016/j.atmosenv.2020.117733

Tominec, I., Larsson, E., Heryudono, A., 2021. A least squares radial basis function finite différence method with improved stability properties (No. arXiv:2003.03132). arXiv.

**Revendications**

1. Procédé de détermination de coordonnées dans l'espace d'une source à l'origine d'un phénomène de dispersion dans un domaine, le phénomène de dispersion étant approché par un système d'équations aux dérivées partielles (20), le procédé comprenant des étapes, mises en oeuvre par ordinateur,

   - d'obtention de mesures (60) quantifiant chacune en un point de l'espace du domaine et à un instant donné une variable d'état modélisée par le système d'équations aux dérivées partielles audit point et audit instant et
   - de minimisation itérative (70) des différences entre les mesures et les calculs du système d'équations pour localiser une position (80) de ladite source,
   le procédé étant **caractérisé en ce que** le système d'équations est exprimé (50) par différences finies supportées par des fonctions de base radiales, le système d'équations étant résolu en moindres carrés, à l'aide d'un solveur de moindres carrés, le système d'équations ayant fait l'objet d'une résolution quadratique adjointe en choisissant des fonctions de base radiale parmi les fonctions splines polyharmoniques, les fonctions inverses multi-quadriques, ou les fonctions gaussiennes.

2. Procédé de détermination de coordonnées selon la revendication 1, **caractérisé en ce que** les étapes d'obtention des mesures localisée et de minimisation des différences entre les mesures et les calculs sont menées dans un domaine spatial décrit (40) avec des conditions limites de Neumann et Dirichlet.

3. Procédé de détermination de coordonnées selon la revendication 1 ou la revendication 2, **caractérisé en ce que** le domaine est caractérisé, outre par ses limites, également par des données de champ (30) dans l'intérieur du domaine.

4. Procédé de détermination selon l'une des revendications 1 à 3, **caractérisé en ce que** le phénomène de dispersion est une dispersion de polluants et que ledit transport est modélisé par une équation d'advection-diffusion.

5. Procédé de détermination selon l'une des revendications 1 à 3, **caractérisé en ce que** le phénomène de dispersion est une diffusion de chaleur à partir d'un point chaud dans un système énergétique.

6. Procédé de détermination selon l'une des revendications 1 à 3, **caractérisé en ce que** le phénomène de dispersion est une diffusion sonore dans un environnement complexe.

7. Procédé de détermination selon l'une des revendications 1 à 6, **caractérisé en ce que** le solveur des moindres carrés est L-BFGS-B ou LSQR.

8. Procédé de détermination selon l'une des revendications 1 à 7, **caractérisé en ce que** les fonctions de base radiales sont les fonctions spline polyharmonique PSH5.

**9.** Procédé de détermination selon l'une des revendications 1 à 8, **caractérisé en ce que** la minimisation itérative (70) des différences entre les mesures et les calculs du système d'équations est menée pour déterminer également une intensité (80) de ladite source.

**Fig. 1**

**Fig. 2**

**Fig. 3**

**Fig. 4**

**Fig. 5**

**Fig. 6**

**Fig. 7**

Fig. 8

Europäisches
Patentamt

European
Patent Office

Office européen
des brevets

**RAPPORT DE RECHERCHE EUROPEENNE**

Numéro de la demande

EP 24 18 5733

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | LI ZI ET AL: "Estimation of river pollution source using the space-time radial basis collocation method", ADVANCES IN WATER RESOURCES, CML PUBLICATIONS, SOUTHAMPTON, GB, [Online] vol. 88, 17 décembre 2015 (2015-12-17), pages 68-79, XP029441828, ISSN: 0309-1708, DOI: 10.1016/J.ADVWATRES.2015.11.019 [extrait le 2024-02-28] * sections 2 et 3 * | 1-9 | INV. G06F17/13 |
| A | ANSHUMAN AATISH ET AL: "Simulation of reactive transport in porous media using radial point collocation method", ENGINEERING ANALYSIS WITH BOUNDARY ELEMENTS, [Online] vol. 104, 31 juillet 2019 (2019-07-31), pages 8-25, XP085676466, ISSN: 0955-7997, DOI: 10.1016/J.ENGANABOUND.2019.03.016 [extrait le 2024-02-28] * sections 2 à 4 * | 1-9 | |
| A,D | TOMINEC IGOR ET AL: "A Least Squares Radial Basis Function Finite Difference Method with Improved Stability Properties", SIAM JOURNAL ON SCIENTIFIC COMPUTING , vol. 43, no. 2 15 mars 2021 (2021-03-15), pages A1441-A1471, XP093135346, US ISSN: 1064-8275, DOI: 10.1137/20M1320079 Extrait de l'Internet: URL:https://arxiv.org/pdf/2003.03132.pdf [extrait le 2024-02-28] * le document en entier * | 1-9 | DOMAINES TECHNIQUES RECHERCHES (IPC)<br><br>G06F |

Le présent rapport a été établi pour toutes les revendications

| Lieu de la recherche | Date d'achèvement de la recherche | Examinateur |
|---|---|---|
| Berlin | 19 novembre 2024 | Virnik, Elena |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

...........................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BARNETT, G.A.** A Robust RBF-FD Formulation based on Polyharmonic Splines and Polynomials. University of Colorado Boulder, 2015
- **DEFFORGE, C.** *Data assimilation for micrometeorological applications with the fluid dynamics model Code_Saturne. Paris-Est, Paris*, 2019
- **FLYER, N.** ; **LEHTO, E.** ; **BLAISE, S.** ; **WRIGHT, G.B.** ; **ST-CYR, A.** A guide to RBF-generated finite différences for nonlinear transport: Shallow water simulations on a sphere. *J. Comput. Phys.*, 2012, vol. 231, 4078-4095
- **FORNBERG, B.** ; **FLYER, N.** A Primer on Radial Basis Functions with Applications to the Geosciences. Society for Industrial and Applied Mathematics, 2015
- **KHODAYI-MEHR, R.** *Model-Based Learning and Control of Advection-Diffusion Transport Using Mobile Robots*, 2019, vol. 285
- **KUMAR, P.** ; **FEIZ, A.-A.** ; **SINGH, S.K.** ; **NGAE, P.** ; **TURBELIN, G.** Reconstruction of an atmospheric tracer source in an urban-like environment. *J. Geophys. Res. Atmosphères*, 2015, vol. 120, 12589-12604, https://doi.org/10.1002/2015JD024110
- **LIU, J.** ; **LI, X.** ; **HU, X.** A RBF-based differential quadrature method for solving two-dimensional variable-order time fractional advection-diffusion équation. *J. Comput. Phys.*, 2019, vol. 384, 222-238, https://doi.org/10.1016/j.jcp.2018.12.043
- **MONS, V.** ; **MARGHERI, L.** ; **CHASSAING, J.-C.** ; **SAGAUT, P.** Data assimilation-based reconstruction of urban pollutant release characteristics. *J. Wind Eng. Ind. Aerodyn.*, 2017, vol. 169, 232-250, https://doi.org/10.1016/j.jweia.2017.07.007
- **MOUSSAFIR, J.** ; **OLDRINI, O.** ; **TINARELLI, G.** ; **SONTOWSKI, J.** *A new operational approach to deal with dispersion around obstacles : the MSS (Micro Swiftt Spray) software suite*, 2004, vol. 5
- **SEPTIER, F.** ; **ARMAND, P.** ; **DUCHENNE, C.** A bayesian inference procedure based on inverse dispersion modelling for source term estimation in built-up environments. *Atmos. Environ.*, 2020, vol. 242, 117733, https://doi.org/10.1016/j.atmosenv.2020.117733
- **TOMINEC, I.** ; **LARSSON, E.** ; **HERYUDONO, A.** A least squares radial basis function finite différence method with improved stability properties. *arXiv:2003.03132). arXiv*, 2021